# EUROPÄISCHE PATENTSCHRIFT

(11) **EP 0 584 472 B1**
(45) Veröffentlichungstag und Bekanntmachung des Hinweises auf die Patenterteilung: **23.10.1996**
(21) Anmeldenummer: 93109344.7
(22) Anmeldetag: 11.06.1993
(51) Int. Cl.: F24C 3/06, F24C 3/08

(54) **Platte aus einem für Wärmestrahlung durchlässigen Material als Kochmulde mit mindestens zwei Sorten von Wärmequellen**
Heat transmitting cooking plate having at least two kinds of heat sources
Plaque de cuisson perméable à la chaleur comportant au moins deux sortes de sources de chaleur

(30) Priorität: 21.08.1992 DE 4227672
(43) Veröffentlichungstag der Anmeldung: 02.03.1994
(73) Patentinhaber: Schott Glaswerke, 55122 Mainz (DE); Carl-Zeiss-Stiftung trading as SCHOTT GLASWERKE, 55122 Mainz (DE)
(72) Erfinder: Kahlke, Michael, D-6503 Mainz-Kastel (DE)

(56) Entgegenhaltungen:
- DE-A- 2 042 539
- DE-A- 2 828 446

## Beschreibung

Die Erfindung betrifft ein Kochgerät nach dem Oberbegriff des Patentanspruchs 1. Es sind derzeit verschiedene Systeme von Kochmulden am Markt bekannt:
1. Kochmulden mit atmosphärischen, offenen Brennern, deren Abdeckung aus Metall, z.B. Stahl, bzw. Stahlemail oder Glas bestehen kann.
   Die Vorteile dieser Geräte sind in ihrer Leistungsfähigkeit bezüglich der sehr kurzen Ansprechdauer und der feinen Regelbarkeit der Wärmeabgabe zu sehen.
   Auch das sofortige visuelle Erkennen einer Flamme kann zur Vermeidung von Brandverletzungen beim Umgang mit dieser Art von Kochmulden vorteilhaft sein.
   Ein weiteres entscheidendes Argument für die Anschaffung von solchen Kochgeräten ist auch der sehr günstige Preis.
   Nachteile ergeben sich jedoch in den Punkten Aussehen, Design-Vielfalt und besonders auch Benutzungs- und Reinigungsfreundlichkeit.
   Eine Kochmulde dieser Bauart wird auch niemals als Arbeitsplatte ein zusätzliches Platzangebot, z.B. beim Zubereiten der Speisen oder zum sicheren Abstellen, z.B. von Lebensmittel, Töpfen, Pfannen bereitstellen.
2. Kochmulden mit vollflächiger, ebener Abdeckung, insbesondere Glaskeramik, deren Wärmequellen unter der Platte angeordnet sind und die nach dem derzeitigen Stand der Technik elektrisch mit Heizwendeln oder mit Infrarot-Gasstrahlungsbrennern beheizt werden können.
   Die Vorteile dieser Kochmulden sind ihr gefälliges Aussehen und ihre Designvielfalt, die sich mit sehr variablen Dekoren und Farbabstimmungen der jeweiligen Küchengestaltung in idealer Weise anpassen lassen.
   Auch eine Reinigung der ebenen Platte ist leicht und problemlos möglich, ebenso wie die Platte als zusätzliche Arbeitsfläche, oder sichere Abstellmöglichkeit zu nutzen.
   Die Temperaturverteilung bei niedrigen Temperaturen, wie sie z.B. zum Warmhalten benötigt werden, ist bei dieser Art von nicht direkt mit einer Flamme beheizten Kochstelle wesentlich gleichmäßiger und die dabei auftretenden Spitzentemperaturen sehr viel niedriger.
   Als Nachteile sind hier zu nennen, eine verzögerte Wärmeabgabe an das zu erhitzende Gut mit einer dementsprechend geringeren Energieausnutzung (Wirkungsgrad) des Heizmediums, dadurch auch eine längere Ankochdauer.
   Auch der Preis liegt im Vergleich zur Kochmulde aus Metall mit offenen Brennern hier erheblich höher.
3. Eine weitere Variante stellt ein Elektroherd mit einer Abdeckung aus Metall dar, der im Gegensatz zur oben genannten vollflächigen Abdekkung einzelne diskrete abgehobene Kochstellen, meist aus schwarzem Gußeisen aufweist.
   Seine Nachteile sind unter anderem das Aussehen und die ebenfalls geringe Reinigungsfreundlichkeit. Auch bis zu sehr hohen Temperaturen ist visuell nicht erkennbar, ob eine Kochstelle gerade beheizt wird. Sein Vorteil ist sein relativ geringer Preis.

Die DE 30 49 491 C2, beansprucht einen Kochherd, dessen obere Fläche von einer einzigen ebenen und eine durchgehend geschlossene Oberfläche aufweisenden wärmeübertragenden Platte, insbesondere einer Glaskeramikplatte, gebildet ist, unter welcher wenigstens ein Gasstrahlungsbrenner angeordnet ist, wobei unterhalb der wärmeübertragenden Platte und außerhalb des Gaskochfeldes neben dem und/oder im Fortkoch- oder Warmhaltefeld wenigstens ein elektischer Strahlheizkörper angeordnet ist.

Aus der DE 30 49 491 C2 sind Gasstrahlungsbrenner neben elektrisch versorgten Strahlheizkörpern unter einer eine durchgehend geschlosssene Oberfläche aufweisenden wärmeübertragenden Platte, bekannt.

Aus der FR 2 626 964 A1, ist ein Herd bekannt, bei dem sich unter einer Glaskeramikabdeckung ein elektrisches Strahlungsheizelement befindet und daneben normale Gasbrenner mit offener Flamme vorgesehen sind.

Auch aus der FR 2 626 964 A1 sind unterschiedliche Sorten von Wärmequellen bekannt, nämlich elektrische Strahlungsheizelemnente neben normalen Gasbrennern, wobei hier die Glaskeramikplatten jeweils nur das einzelne elektrische Strahlungsheizelement überdecken und keine durchgehende Platte mit unter, in oder auf ihr verteilten Wärmequellen ausbilden.

Aufgabe der Erfindung ist es, ein Kochgerät mit einer für Wärmestrahlung durchlässige Platte zur Verfügung zu stellen, das die Vorteile der nach dem Stand der Technik bekannten Konzepte erfinderisch kombiniert und für die jeweilige Kochsituation die dafür ideale Wärmequelle anbietet.
Darüber hinaus ist es Aufgabe der Erfindung, dem Verbraucher eine Platte an die Hand zu geben, die in Designvielfalt, Dekorangebot, individueller Anpassung an die Raumumgebung und Reinigungsfreundlichkeit dem heute technisch möglichen und machbaren entspricht.

Dabei ist optimale Sicherheit, wie das sofortige Erkennen des Betriebszustandes der Wärmequelle, kurze Ankochdauer und schnelles Ansprechen auf Regelungsänderungen, d.h. einen hohen Nutzungsgrad der eingebrachten Energie, zu gewährleisten.

Diese Aufgabe wird nach der Erfindung durch die Merkmale des Patentanspruchs 1 gelöst. In Patentanspruch 2 ist eine bevorzugte Ausführungsform der Erfindung beschrieben.

Eine Sorte von Wärmequellen sind als Infrarot-Gasstrahlungsbrenner ausgebildet, während die andere Sorte von Wärmequellen offene Gasbrenner sind, d.h. die Platte weist gleichzeitig Infrarotstrahlungsbrenner und atmosphärische offene Gasbrenner auf.

Um dieses erfindungsgemäße Konzept zu verwirklichen, ist es notwendig, daß in der Platte Durchlässe für in und/oder über der Platte angeordnete Wärmequelle vorgesehen sind.

Werden andere Wärmequellen, wie z.B. sogenannte "Heat pipes" eingesetzt, so sind Ausnehmungen für in der Platte angeordneten Wärmequellen vorzusehen.

An folgenden Ausführungsbeispielen soll die vorliegende Erfindung weiter verdeutlicht werden.

Es zeigen:
- Figur 1: Platte eines Gaskochgerätes mit zwei offenen Gasbrennern und einem Infrarot-Gasstrahlungsbrenner mit einer Warmhaltezone.
- Figur 2: Platte eines Gaskochgerätes mit zwei offenen Gasbrennern und zwei Infrarot-Gasstrahlungsbrennern mit einer Warmhaltezone.
- Figur 3: Platte eines Gaskochgerätes mit einem offenen Gasbrenner und zwei Infrarot-Gasstrahlungsbrennern mit zwei Warmhaltezonen.
- Figur 4: Platte eines Kochgerätes mit drei offenen Gasbrennern und einem Infrarot-Gasstrahlungsbrenner mit einer Warmhaltezone.

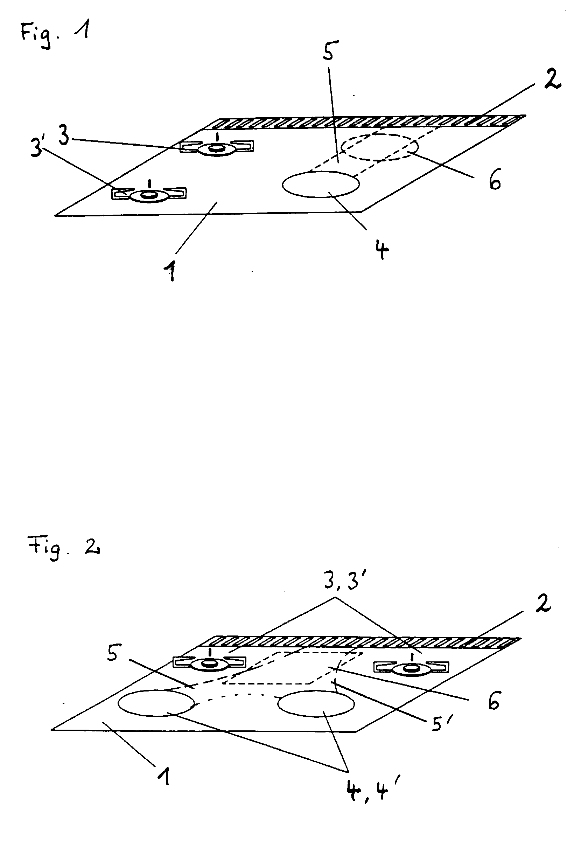

Figur 1 zeigt eine Platte (1) eines Gaskochgerätes aus Glaskeramik und eine durchbrochene Leiste (2) für den Abgasaustritt.
Auf der Platte sind vier Wärmequellen verteilt angeordnet, wobei die Wärmequellen (3) und (3') als offene Gasbrenner, und die Wärmequelle (4) als Infrarot-Gasstrahlungsbrenner ausgebildet sind.

Die einen Abgaskanal (5) benötigenden Gasstrahlungsbrenner sind in diesem Ausführungsbeispiel so angeordnet, daß der Abgaskanal (5) eine möglichst große Wärmeaustauschfläche mit der überliegenden Glaskeramikplatte aufweist und damit als eine zusätzliche Wärmequelle eine Warmhaltezone (6) entsteht.
Die Temperatur der Warmhaltezone kann dabei durch gezielte Steuerung, z.B. der Weglänge des Abgasstromes unter der Glaskeramikplatte, geregelt werden.

Diese Platte eines Gaskochgerätes verbindet die Vorteile der offenen Flamme, wie
- kurze Ankochdauer
- schnelle Regulierbarkeit
- sofortige Visualisierung der Flamme, mit den Annehmlichkeiten einer Glaskeramikplatte, wie
- Designvielfalt,
- Dekorierbarkeit,
- individuelle Anpassung an die Raumumgebung,
- Reinigungsfreundlichkeit.

Darüber hinaus kann die Fortkochtemperatur mit Infrarot-Gasstrahlungsbrennern besser eingestellt werden, als mit offenen Gasbrennern. Warmhaltezonen können hier ebenfalls realisiert werden.

Der Verbraucher kann mit diesem Gerätetyp individuell entscheiden, welche Wärmequelle er für welchen Arbeitsvorgang optimal einsetzen will.

Figur 2 zeigt eine Platte (1) mit fünf Wärmequellen, zwei offenen Gasbrennern (3) und (3') zwei Gasstrahlungsbrennern (4), (4') und einer Warmhaltezone (6), die ebenfalls wieder über den Abgaskanälen (5), (5') der Infrarot-Gasstrahlungsbrennern hier zwischen den offenen Gasbrennern (3), (3') angeordnet ist.

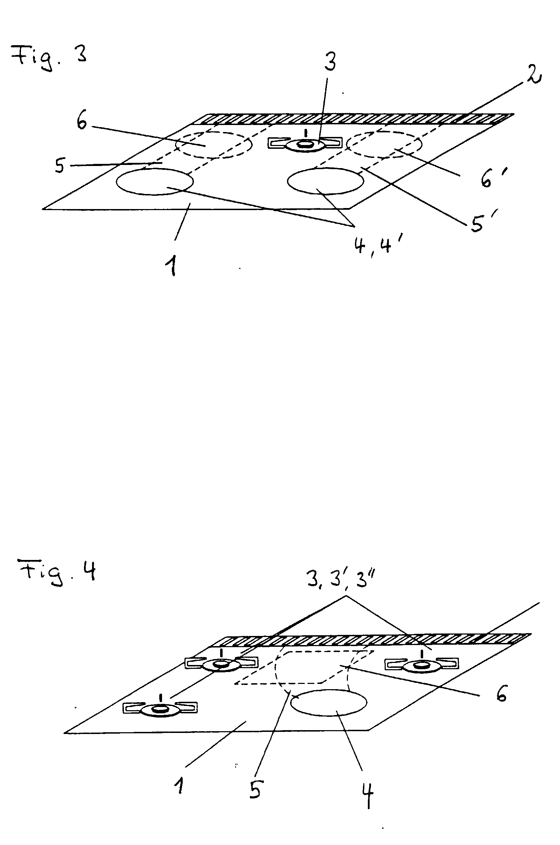

Figur 3 zeigt ebenfalls eine Platte (1) mit fünf Wärmequellen, wobei hier ein offener Gasbrenner (3), zwei Gasstrahlungsbrenner (4), (4') und zwei Warmhaltezonen (6), (6') vorgesehen sind.

Figur 4 stellt eine Platte (1) mit wiederum fünf Wärmequellen vor. Hier sind neben drei offenen Gasbrennern (3), (3'), (3'') ein Infrarot-Gasstrahlungsbrenner (4) und eine Warmhaltezone (6) gezeigt.

Die hier dargestellten Ausführungsformen sind dabei beispielhaft und keineswegs umfassend.

## Patentansprüche

1. Kochgerät mit einer Platte aus einem für Wärmestrahlung durchlässigen Material, wie Glaskeramik, Glas, Keramik, zum Kochen, Backen, Braten und/oder Warmhalten, mit regelbaren verteilt angeordneten gasbeheizten, unterschiedlichen Sorten von Wärmequellen, die zum einen Teil unter der Platte verteilt angeordnet und indirekt durch Infrarotstrahlung durch die Platte hindurch als Gasstrahlungsbrenner wirksam sind und die zum anderen Teil über oder im Niveau der Platte angeordnet sind und direkt durch Erzeugung offener Flammen als atmosphärische, offene Gasbrenner Wärme übertragen.

2. Kochgerät nach Anspruch 1,
**dadurch gekennzeichnet**,
daß es weitere Wärmequellen aufweist, die die sekundär entstehende Abwärme der heißen Gase der Gasstrahlungsbrenner nutzen und die auf der Platte als Warmhaltezone ausgebildet sind.

## Claims

1. A cooking device having a plate of a material which is permeable to heat radiation, such as glass ceramic, glass or ceramic, for cooking, baking, roasting and/or keeping warm, having different types of heat sources which are adjustable, are arranged in a distributed manner and are gas-heated, of which some are arranged distributed below the plate and are effective as gas radiation burners indirectly as a result of infrared radiation through the plate, and of which others are arranged above or at the level of the plate and transmit heat as atmospheric open gas burners directly by generating open flames.

2. A cooking device according to Claim 1, characterized in that it has further heat sources which use the waste heat which is a secondary product of the hot gases of the gas radiation burners, and which are constructed as zones on the plate, for keeping warm.

## Revendications

1. Appareil de cuisson comportant une plaque en un matériau perméable au rayonnement thermique, tel que de la vitrocéramique, du verre, de la céramique, pour faire bouillir, rôtir, frire et/ou maintenir chaud, comportant différents types de sources de chaleur réglables, chauffées au gaz, réparties sur la plaque qui, pour une partie sont disposées sous la plaque et agissent de manière indirecte, par rayonnement infrarouge à travers la plaque, en tant que brûleurs radiants à gaz et pour une autre partie sont disposées au-dessus ou au niveau de la plaque et transmettent directement la chaleur, par production de flammes, en tant que brûleurs ouverts, atmosphériques, à gaz.

2. Appareil de cuisson selon la revendication 1, caractérisé par le fait qu'il comporte d'autres sources de chaleur qui utilisent la chaleur perdue secondaire des gaz chauds des brûleurs radiants à gaz et qui sont agencées sous forme de zone de maintien au chaud sur la plaque.
